# EUROPEAN PATENT SPECIFICATION

(11) **EP 1 473 496 B1**
(45) Date of publication and mention of the grant of the patent: **17.05.2006**
(21) Application number: 04006989.0
(22) Date of filing: 23.03.2004
(51) Int. Cl.: F16K 31/04

(54) **Motor actuated flow-rate adjustment valve for fluids, particularly refrigeration fluids**
Motorbetriebenes durchflussregelendes Flüssigkeitsventil, insbesondere für Kältemittel
Soupape à moteur électrique pour l'ajustage du débit de fluide, en particulier de fluide de refroidissement

(30) Priority: 25.03.2003 IT PD20030027 U
(43) Date of publication of application: 03.11.2004
(73) Proprietor: Carel S.p.A., 35020 Brugine (Padova) (IT)
(72) Inventor: Nalini, Luigi, 35100 Padova (IT)
(74) Representative: Modiano, Micaela Nadia

(56) References cited:
- EP-A- 0 937 928
- EP-A- 1 087 158
- WO-A-03/023265
- US-A- 2 956 188
- PATENT ABSTRACTS OF JAPAN vol. 0092, no. 09 (M-407), 27 August 1985 (1985-08-27) & JP 60 069378 A (TAIHEIYOU KOGYO KK), 20 April 1985 (1985-04-20)

## Description

The present invention relates to a flow-rate adjustment valve for fluids, particularly refrigeration fluids.

Expansion valves are currently commonly used in refrigeration circuits of the compression type.

In particular, two-way valves are used to control the flow of refrigerant by means of a passage and a flow control element that is preferably actuated by means of an electric motor.

Such valves, which have a thermostatically controlled expansion, are designed to control the flow of circulating refrigerant.

A flow-rate adjustment valve for fluids, particularly refrigeration fluids, has been devised which is servoactuated by means of an electric motor and is disclosed in EPA 99101786.4 of February 15, 1999. It comprises a valve body provided with intake and discharge ports and a flow control element, and a motor section for actuating and adjusting the flow control element; in such valve, the rotor component of the motor is supported so that it can rotate within a hermetic capsule that is fixed to the valve body; such rotor component, which is fixed axially, is coupled by way of a screw-and-nut coupling to a part of the flow control element, which is coupled to the valve body so as to perform only axial translational motions.

This valve is capable of performing a fine adjustment of the degree of closure of the passage without the danger of damage or wear to the edges of the passage to be closed.

Another particularity of the valve is that it can also be adapted to refrigeration systems that have already been installed and ensures absolutely a hermetic seal with respect to the outside for the refrigeration fluids that flow through it.

The structure of the valve is constructively simple and can be provided by virtue of known technologies and means, with consequent low production costs.

Although this known valve is highly appreciated and has been commercially available for a long time, it still has drawbacks.

In particular, since the valve body is monolithic, in order to be produced it must undergo expensive and long machining, such as internal and external turning, grinding and the like.

Such machining is onerous not only in terms of labor and machine time, but also because of the amount of waste and therefore discarded raw material that it produces.

Further, the rotor component is provided by means of a female thread that is obtained by casting and is inserted and fixed in a magnetized substantially tubular element that is internally shaped complementarily so as to accommodate said female thread.

Such series of casting, assembly and fixing operations is an indication of a certain constructive complexity, which in any case has a negative effect on the overall cost of the valve.

The aim of the present invention is to provide a flow-rate adjustment valve for fluids, particularly refrigeration fluids, that is constructively simpler than known types and can be obtained by way of cheaper machining and assembly operations than known valves, with a consequent reduction in production costs.

Within this aim, an object of the present invention is to provide a flow-rate adjustment valve for fluids, particularly refrigeration fluids, by reducing the consumption of raw materials and intermediate components.

Another object of the present invention is to provide a flow-rate adjustment valve for fluids, particularly refrigeration fluids, whose technical and mechanical capabilities are not inferior to those provided by known structures.

A further object of the present invention is to provide a flow-rate adjustment valve for fluids, particularly refrigeration fluids, that is particularly flexible in terms of application and can also be adapted to refrigeration systems that have already been installed.

A still further object of the present invention is to provide a flow-rate adjustment valve for fluids that can be produced with known equipment and technologies and therefore at even more competitive costs.

This aim and these and other objects that will become better apparent hereinafter are achieved by a flow-rate adjustment valve for fluids, particularly refrigeration fluids, which is servoactuated by means of an electric motor, of the type that comprises, within a hermetically sealed enclosure capsule and supported so that it can rotate by way of means for reducing rotational friction, the rotor component of said electric motor, coupled with a screw-and-nut coupling to a flow control element that is retained so as to perform only axial translational motions in a valve body provided with intake and discharge ports and fixed coaxially to said capsule, said valve being characterized in that said valve body is composed of a tubular cup formed by drawing, which is contoured so as to accommodate a guiding element for said flow control element and so as to engage intake and discharge tubes at said ports, said flow control element being constituted by a stem with a threaded shank and a needle-like opposite flow control end, said stem having an alignment and rotation-preventing block overmolded thereon in an intermediate position, said rotor component comprising a female thread for coupling to said threaded shank that is obtained by casting and on which a cylindrical element made of plastoferrite is overmolded, said element being provided with an annular groove for the guiding and abutment of elastic counterthrust means for said means for reducing rotational friction, said enclosure capsule being formed by a tubular portion that is closed in an upper region by a cap-like portion.

Further characteristics and advantages of the present invention will become better apparent from the following detailed description of an embodiment thereof, illustrated by way of non-limiting example in the accompanying drawings, wherein:
Figure 1 is a front view of a valve according to the invention;
Figure 2 is a sectional exploded view of the valve of Figure 1, comprising the stator component of said electric motor;

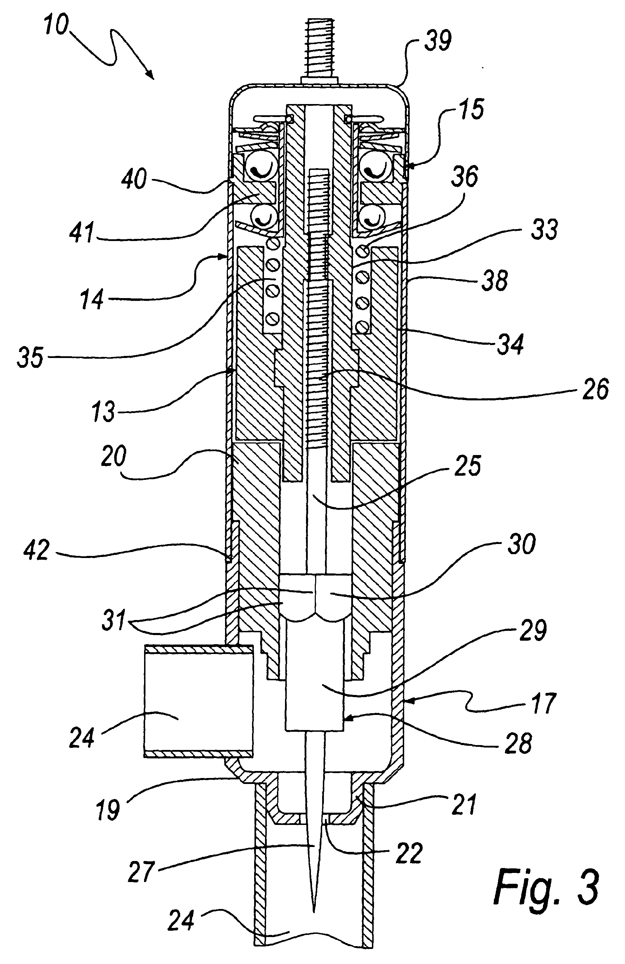

Figure 3 is a sectional orthographic projection view of a valve according to the invention.

With reference to the figures, a flow-rate adjustment valve for fluids, particularly refrigeration fluids, is generally designated by the reference numeral 10.

The valve 10 is servoactuated by means of an electric motor 11, a stator component of which is designated by the reference numeral 12.

A rotor component 13 of the electric motor 11 is contained within a hermetic enclosure capsule 14 and is supported so that it can rotate by virtue of means 15 for reducing rotational friction.

The rotor component 13 has a screw-and-nut coupling with a flow control element 16.

The flow control element 16 is retained so as to perform only axial translational motions in a valve body 17.

The valve body 17 is provided with intake and discharge ports 18 and is fixed coaxially to the capsule 14.

The valve body 17 is constituted by a tubular cup 19 formed by drawing.

By way of the drawing operation, the resulting valve body 17 is shaped so as to accommodate a guiding element 20 for the flow control element 16.

By virtue of the same drawing operation, a cylindrical portion 21 that is coaxial to the cup 19 and is provided with a passage 22 for the flow of the fluid is formed on the bottom of the cup 19.

The flow control element 16 engages in the opening 22, which forms one of the ports 18, so as to adjust the flow-rate of fluid.

Then, after drawing, a hole 23 is formed in the tubular cup 19 and forms another one of the ports 18, also for the flow of the fluid.

The cylindrical portion 21 and the hole 23 both act as guides for the engagement on the cup 19 of first intake and discharge tubes 24, formed by drawing at the ports 18.

The flow control element 16 is constituted by a stem 25 with a threaded shank 26 and a needle-shaped opposite flow control end 27.

The stem 25 has a rotation-preventing alignment block 28 overmolded thereon in an intermediate position.

The block 28 is constituted by a cylinder 29 with a prism-shaped upper portion 30.

A gasket, not shown, is conveniently provided on the stem 25, below and adjacent to the block 28, and is capable of ensuring the hydraulic tightness of the valve in the fully closed position.

The closure function of said gasket is ensured by a raised circular abutment, not shown in the drawings, which is provided internally around the passage 22.

Such gasket therefore allows to avoid the expensive fitting of other devices, for example a solenoid valve, suitable to provide the same hydraulic sealing function.

The prism-like portion 30 of the block 28 engages its edges 31 in the grooves 32 of the guiding element 20, while the cylinder 29 follows the vertical sliding, ensuring minimal hunting for the flow control element 16.

The guiding element 20 is provided by a turned, broached and drilled hexagonal bar segment.

The element 20 thus machined is then forced inside the cup 19.

The rotor component 13 is constituted by a female thread 33 for coupling to the threaded shank 26.

The female thread 33 is obtained by casting.

A cylindrical element 34 made of plastoferrite is overmolded on the female thread 33.

The cylindrical element 34 has an annular guiding and abutment groove 35 for elastic counterthrust means 36 for the means 15 for reducing rotational friction.

The elastic counterthrust means 36 are constituted by a helical spring.

The means 15 for reducing rotational friction are constituted by a bearing 37 with two rings of balls.

The enclosure capsule 14 is provided by a tubular portion 38 that is closed in an upper region by a cap-like portion 39.

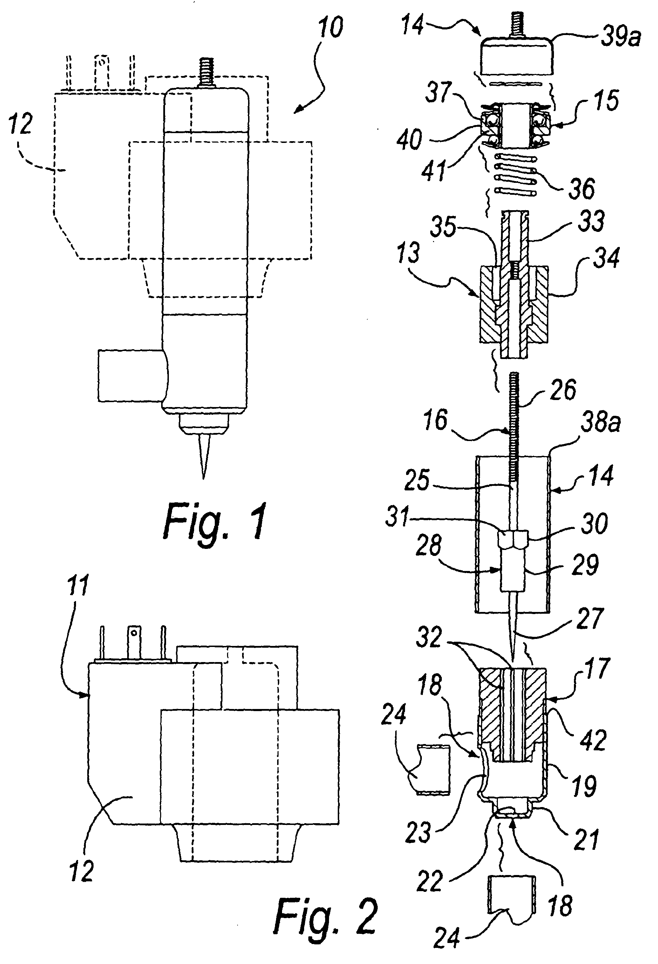

In a second embodiment, the tubular portion 38 and the cap-like portion 39 are constituted respectively by a second tube 38a formed by drawing and by a cap 39a formed by drawing, as shown in Figure 2.

In a third embodiment, not shown, the tubular portion 38 and the cap-like portion 39 are constituted by a single part obtained by deep casting.

The tube 38 and the cap 39 both abut against an abutment rim 40 that surrounds peripherally the cage 41 of the bearing 37.

The tube 38 and the cap 39 are sealed at the rim 40 by laser welding.

Likewise, the tube 38, by resting against an abutment step 42 with which the upper edge of the cup 19 is provided, is welded to the cup 19 of the valve body 17.

The intake and discharge tubes 24, obtained by drawing, are inserted in the cylindrical portion 21 and in the hole 23 and are also sealed by laser welding.

In practice it has been found that the invention thus described solves the problems noted in known types of flow-rate adjustment valve for fluids, particularly refrigeration fluids.

In particular, the present invention provides a valve whose components are obtained to a large extent by drawing and casting, with a considerable reduction in production costs.

In practice, the materials employed, so long as they are compatible with the specific use, as well as the dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A flow-rate adjustment valve for fluids, servoactuated by means of an electric motor, of the type that comprises, within a hermetically sealed enclosure capsule (14) being formed by a tubular portion (38) that is closed in an upper region by a cap-like portion (39) and supported so that it can rotate by way of means (15) for reducing rotational friction, the rotor component (13) of said electric motor, coupled with a screw-and-nut coupling to a flow control element (16) that is retained so as to perform only axial translational motions in a valve body (17) provided with intake and discharge ports (18) and fixed coaxially to said capsule (14), said valve being **characterized in that** said valve body (17) is composed of a tubular cup (19) formed by drawing, which is contoured so as to accommodate a guiding element (20) for said flow control element (16) and so as to engage first intake and discharge tubes (24) at said ports (18), said flow control element (16) being constituted by a stem (25) with a threaded shank (26) and a needle-like opposite flow control end (27), said stem (25) having an alignment and rotation-preventing block (28) overmolded thereon in an intermediate position, said block (28) being provided with edges (31) suitable to slide in complementarily-shaped grooves (32) provided on said guiding element (20), said rotor component (13) comprising a female thread (33) for coupling to said threaded shank (26) that is obtained by casting and on which a cylindrical element (34) made of plastoferrite is overmolded, said element being provided with an annular groove (35) for the guiding and abutment of elastic counterthrust means (36) for said means (15) for reducing rotational friction.

2. The valve according to claim 1, **characterized in that** a cylindrical portion (21) protrudes from the bottom of said cup (19), is coaxial to said cup (19) and is provided with a passage (22) for the flow of the fluid.

3. The valve according to claim 2, **characterized in that** said cup (19) has, in a lateral lower part thereof, a hole (23) for the flow of the fluid.

4. The valve according to claim 3, **characterized in that** said passage (22) and said hole (23) provide said ports (18).

5. The valve according to claim 1, **characterized in that** said tubular portion (38) and said cap-like portion (39) are provided respectively by a second tube (38a) formed by drawing and by a cap (39a) formed by drawing.

6. The valve according to claim 1, **characterized in that** said tubular portion (38) and said cap-like portion (39) are constituted by a single part obtained by deep casting.

7. The valve according to claim 1, **characterized in that** said guiding element (20) is provided by a turned, broached and drilled hexagonal bar segment.

8. The valve according to claim 1, **characterized in that** said block (28) is composed of a cylinder (29) and a prism-shaped upper portion (30).

9. The valve according to claim 1, **characterized in that** said elastic counterthrust means (36) are constituted by a helical spring.

10. The valve according to claim 1, **characterized in that** said means for reducing rotational friction (15) comprise a bearing (37) with two rings of balls.

## Patentansprüche

1. Durchflussregelndes, mittels eines Elektromotors betriebenes Ventil für Fluide der Bauart umfassend in einer durch einen rohrförmigen Abschnitt (38), der in einer oberen Region durch einen deckelartigen Abschnitt (39) abgeschlossen ist, gebildeten, hermetisch abgedichteten Abdeckkapsel (14) eine Rotorkomponente (13) des Elektromotors, derart abgestützt, dass sie durch Mittel (15) zum Reduzieren der Drehreibung rotieren kann, welche über eine Schrauben-Mutter-Kupplung mit einem Flussregelelement (16) verbunden ist zur Ausführung nur axialer translatorischer Bewegungen in einem Ventilkörper (17), welches mit Einlass- und Auslassöffnungen (18) versehen und koaxial zu der Kapsel (14) fixiert ist,
**dadurch gekennzeichnet,**
**dass** der Ventilkörper (17) gebildet ist aus einer rohrförmigen Schale (19), die durch Ziehen hergestellt ist, welche derart umrissen ist, ein Führungselement (20) für das Flussregelelement (16) aufzunehmen und mit ersten Einlass- und Auslassrohren (24) an den Öffnungen (18) in Eingriff zu stehen, wobei das Flussregelelement (16) gebildet ist durch eine Schaltspindel (25) mit einem mit Gewinde versehenen Schaft (26) und einem nadelartigen entgegengesetzten Flussregelende (27), wobei die Schaltspindel (25) einen ausrichtenden und rotationsverhindernden Block (28) aufweist, der darauf in einer Zwischenposition darübergeformt ist, wobei der Block (28) mit Kanten (31) ausgebildet ist, die dazu geeignet sind, in komplementär ausgebildeten, auf dem Führungselement (20) vorgesehenen Fugen (32) zu gleiten, wobei die Rotorkomponente (13) einen weiblichen Gewindegang (33) zum Koppeln mit dem mit Gewinde versehenen Schaft (26) umfasst, welcher durch Abformen erhalten und auf welchem ein zylindrisches Element (34) aus Plastoferrit übergeformt ist, wobei das Element mit einer ringförmigen Nut (35) für die Führung und den Anschlag von elastischen Gegendruckmitteln (36) für die Mittel (15) zum Reduzieren der Rotationsreibung ausgebildet ist.

2. Ventil nach Anspruch 1, **dadurch gekennzeichnet, dass** ein zylindrischer Abschnitt (21) von dem Boden der Schale (19) vorsteht und koaxial zu der Schale (19) und mit einem Durchlass (22) für den Fluss des Fluids ausgebildet ist.

3. Ventil nach Anspruch 2, **dadurch gekennzeichnet, dass** die Schale (19) in einem seitlichen unteren Teil eine Durchbrechung (23) für den Fluss des Fluids aufweist.

4. Ventil nach Anspruch 3, **dadurch gekennzeichnet, dass** der Durchlass (22) und die Durchbrechung (23) die Öffnungen (18) bilden.

5. Ventil nach Anspruch 1, **dadurch gekennzeichnet, dass** der rohrförmige Abschnitt (38) und der deckelartige Abschnitt (39) jeweils durch ein zweites Rohr (38a) und einen Deckel (39a) gebildet sind, die durch Ziehen hergestellt sind.

6. Ventil nach Anspruch 1, **dadurch gekennzeichnet, dass** der rohrförmige Abschnitt (38) und der deckelartige Abschnitt (39) gebildet sind durch ein einziges durch Gießen hergestelltes Teil.

7. Ventil nach Anspruch 1, **dadurch gekennzeichnet, dass** das Führungselement (20) gebildet ist durch einen gedrehten, geräumten und gebohrten hexagonalen Stangenabschnitt.

8. Ventil nach Anspruch 1, **dadurch gekennzeichnet, dass** der Block (28) gebildet ist durch einen Zylinder (29) und durch einen prismaförmigen oberen Abschnitt (30).

9. Ventil nach Anspruch 1, **dadurch gekennzeichnet, dass** die elastischen Gegendruckmittel (36) gebildet sind durch eine Schraubenfeder.

10. Ventil nach Anspruch 1, **dadurch gekennzeichnet, dass** die Mittel zum Reduzieren der Drehreibung (15) ein Lager (37) mit zwei Kugelringen umfassen.

## Revendications

1. Soupape d'ajustement de débit de fluides servocommandée à l'aide d'un moteur électrique, du type comprenant, dans une capsule à fermeture hermétique (14), qui est formée par une partie tubulaire (38) et fermée dans une région supérieure par une partie similaire à un capuchon (39), supportée de façon à ce qu'elle puisse tourner à l'aide de moyens (15) destinés à réduire une friction par rotation, le composant rotor (13) dudit moteur électrique, relié à un couplage vis/écrou se couplant à un élément de commande de débit (16) qui est retenu de façon à effectuer seulement des mouvements de translation axiale dans un corps de soupape (17) équipé de ports d'admission et d'évacuation (18) et fixé de manière coaxiale à ladite capsule (14), ladite soupape étant **caractérisée en ce que** ledit corps de soupape (17) est constitué d'une cuvette tubulaire (19) formée par étirage, qui a un contour tel qu'elle puisse recevoir un élément de guidage (20) pour ledit élément de commande de débit (16) et de façon à engager des premiers tubes d'admission et d'évacuation (24) desdits ports (18), ledit élément de commande de débit (16) étant constitué d'une tige (25) avec un manchon fileté (26) et d'une extrémité de commande de débit opposée similaire à une aiguille (27), ladite tige (25) ayant un bloc anti-rotation d'alignement (28) surmoulé sur celle-ci dans une position intermédiaire, ledit bloc (28) étant pourvu de bords (31) appropriés pour coulisser dans des renfoncements formés de manière complémentaire (32) fournis sur ledit élément de guidage (20), ledit composant rotor (13) comprenant un filetage femelle (33) destiné à être couplé au dit manchon fileté (26) qui est obtenu par moulage et sur lequel est surmoulé un élément cylindrique (34) réalisé à partir de plastoferrite, ledit élément étant pourvu d'un renfoncement annulaire (35) pour le guidage et la butée de moyens élastiques de contre-butée (36) avec lesdits moyens (15) afin de réduire la friction par rotation.

2. Soupape selon la revendication 1, **caractérisée en ce qu'**une partie cylindrique (21) fait saillie à partir de la partie inférieure de ladite cuvette (19), cette partie est coaxiale à ladite cuvette (19) et est pourvue d'un passage (22) pour le débit du fluide.

3. Soupape selon la revendication 2, **caractérisée en ce que** ladite cuvette (19) a, dans une partie inférieure latérale de celle-ci, un orifice (23) pour le débit du fluide.

4. Soupape selon la revendication 3, **caractérisée en ce que** ledit passage (22) et ledit orifice (23) fournissent lesdits ports (18).

5. Soupape selon la revendication 1, **caractérisée en ce que** ladite partie tubulaire (38) et ladite partie similaire à un capuchon (39) sont pourvues respectivement d'un second tube (38a) formé par étirage et d'un capuchon (39a) formé par étirage.

6. Soupape selon la revendication 1, **caractérisée en ce que** ladite partie tubulaire (38) et ladite partie similaire à un capuchon (39) sont constituées d'une seule pièce obtenue par moulage en profondeur.

7. Soupape selon la revendication 1, **caractérisée en ce que** ledit élément de guidage (20) est pourvu d'un segment de barre hexagonal, tourné, broché et foré.

8. Soupape selon la revendication 1, **caractérisée en ce que** ledit bloc (28) est constitué d'un cylindre (29) et d'une partie supérieure ayant la forme d'un prisme (30).

9. Soupape selon la revendication 1, **caractérisée en ce que** lesdits moyens élastiques de contre-butée (36) sont constitués d'un ressort hélicoïdal.

10. Soupape selon la revendication 1, **caractérisée en ce que** lesdits moyens destinés à réduire la friction par rotation (15) comprennent un support (37) avec deux bagues à billes.
